# EUROPÄISCHE PATENTSCHRIFT

(11) **EP 0 610 450 B1**
(45) Veröffentlichungstag und Bekanntmachung des Hinweises auf die Patenterteilung: **04.06.2003**
(21) Anmeldenummer: 93909333.2
(22) Anmeldetag: 15.10.1992
(51) Int. Cl.: C08G 18/08, C08G 18/42

(54) **LACKE, EIN VERFAHREN ZU IHRER HERSTELLUNG UND IHRE VERWENDUNG**
VARNISH, A PROCESS FOR ITS MANUFACTURE AND ITS USE
VERNIS, PROCEDE POUR SA FABRICATION ET SON UTILISATION

(30) Priorität: 29.10.1991 DE 4135571
(43) Veröffentlichungstag der Anmeldung: 17.08.1994
(73) Patentinhaber: BAYER AG, 51368 Leverkusen (DE)
(72) Erfinder: DHEIN, Rolf, D-4150 Krefeld (DE); REUTER, Knud, D-4150 Krefeld (DE); BÄCKER, Lothar, D-4047 Dormagen 5 (DE); PROBST, Joachim, D-5090 Leverkusen (DE); KUBITZA, Werner, D-5090 Leverkusen 3 (DE); RETTIG, Rainer, Amagasaki (JP)
(86) Internationale Anmeldenummer: EP9202373
(87) Internationale Veröffentlichungsnummer: WO93009157

(56) Entgegenhaltungen:
- EP-A- 0 315 832
- EP-A- 0 358 979

## Beschreibung

Die Erfindung betrifft neue wäßrige Lacke auf Basis einer in einem wäßrigen Medium gelöst und/oder dispergiert vorliegenden Polyolkomponente, bestehend aus einem höhermolekularen Polykondensationsharz oder einem Gemisch eines Polykondensationsharzes mit einem Polymerisationsharz und einer hierin emulgiert vorliegenden Polyisocyanatkomponente, ein Verfahren zur Herstellung derartiger Lacke, ihre Verwendung und lackierte Substrate.

Wäßrige Lacksysteme gewinnen zunehmend an Bedeutung aus wirtschaftlichen und aus ökologischen Gründen. Die Substitution konventioneller Lacksysteme geht jedoch langsamer vonstatten, als das anfangs erwartet wurde.

Das hat zahlreiche Gründe. So haben wäßrige Dispersionen häufig noch Nachteile hinsichtlich der Verarbeitung im Vergleich zu organisch gelösten Lacksystemen. Bei wäßrigen Lösungen hingegen gibt es das Problem der ausreichenden Wasserlöslichkeit einerseits sowie der daraus sich gegenläufig ableitenden geringeren Wasserbeständigkeit der Überzüge im Vergleich zu konventionell gelösten Lacksystemen. Hinzu kommen auch hier Verarbeitungsprobleme, die sich vielfach aus der hohen Viskosität und der Viskositätsanomalie ergeben und die bisher durch die Mitverwendung organischer Hilfslösungsmittel überwunden wurden. Die Menge der hierbei einsetzbaren Hilfslösungsmittel ist jedoch begrenzt, da andernfalls der ökologische Sinn wäßriger Systeme verwischt wird.

Erst in jüngster Zeit sind wäßrige Zweikomponenten-Polyurethansysteme bekannt geworden (EP-A 0 358 979), deren Bindemittel aus einem in Wasser gelöst oder dispergiert vorliegenden Polyacrylatharz in Kombination mit einem in dieser Dispersion oder Lösung emulgiert vorliegenden Polyisocyanat mit freien Isocyanatgruppen besteht. Es handelt sich hierbei im wesentlichen um lösungsmittelfreie Systeme, was bereits aus dem Umstand ersichtlich ist, daß die Lösungsmittel, die bei der Herstellung der Polymerisatharze verwendet worden sind, vor der Herstellung der wäßrigen Zubereitung entfernt werden.

Ein eigener älterer Vorschlag (Deutsche Patentanmeldung P 41 01 527.4) betrifft wäßrige Zweikomponenten-Poly urethansysteme auf Basis von in Wasser gelösten oder dispergierten, urethanmodifizierten Polyesterharzen und in diesen Lösungen bzw. Dispersionen emulgierten Polyisocyanaten.

Überraschenderweise wurde jetzt gefunden, daß auch analoge Systeme auf Basis von urethangruppenfreien Polykondensationsharzen, insbesondere Polyesterharzen, als Bindemittel für wäßrige bzw. wäßrig-organische Lacke geeignet sind.

Gegenstand der Erfindung sind Lacke auf Basis eines Bindemittel bestehend aus einer Kombination aus
a) einer in Wasser bzw. einem Wasser/Lösungsmittelgemisch gelöst und/oder dispergiert vorliegenden Polyolkomponente und
b) einer in der Lösung und/oder Dispersion a) emulgierbaren Polyisocyanatkomponente aus organischen Polyisocyanaten mit freien Isocyanatgruppen und einer Viskosität bei 23°C von 50 bis 10000 mPa.s
in einem Äquivalentverhältnis von Isocyanatgruppen der Komponente b) zu alkoholischen Hydroxylgruppen in der Lösung und/oder Dispersion a) von 0,5:1 bis 5:1 entsprechenden Mengen, dadurch gekennzeichnet, daß die Polyolkomponente im wesentlichen aus
a1) einem wasserverdünnbaren, Hydroxylgruppen aufweisenden, urethangruppen- und sulfonatgruppenfreien Polykondensationsharz mit einem Molekulargewicht Mₙ von mehr als 500 oder
a2) einem Gemisch eines derartigen Polykondensationsharzes mit bis zu 100 Gew.-%, bezogen auf das Gewicht des Polykondensationsharzes, mindestens eines wasserverdünnbaren, Hydroxylgruppen aufweisenden Polymerisationsharzes mit einem Molekulargewicht Mₙ von mehr als 500
besteht;
ausgenommen Bindemittel, in denen die Komponente a) zu 5 bis 70 Gew.-% bezogen auf das Gewicht der Komponente a1) oder a2), aus einem Reaktivverdünner besteht, der eine wasserlösliche, bei Normaldruck nicht destillierbare oder einen Siedepunkt von mindestens 150°C aufweisende Verbindung mit einem unter 500 liegenden Molekulargewicht Mn und mindestens einer gegenüber Isocyanatgruppen reaktionsfähigen Gruppe ist.

Gegenstand der Erfindung ist auch ein Verfahren zur Herstellung derartiger Lacke welches dadurch gekennzeichnet ist, daß man in einer wäßrigen oder wäßrig-organischen Lösung oder Dispersion einer Polyolkomponente bestehend im wesentlichen aus
a1) einem wasserverdünnbaren, Hydroxylgruppen aufweisenden, urethangruppen- und sulfonatgruppenfreien Polykondensationsharz mit einem Molekulargewicht Mn von mehr als 500 oder
a2) einem Gemisch eines derartigen Polykondensationsharzes mit bis zu 100 Gew. -%, bezogen auf das Gewicht des Polykondensationsharzes, mindestens eines wasserverdünnbaren, Hydroxylgruppen aufweisenden Polymerisationsharzes mit einem Molekulargewicht Mn von mehr als 500
eine Polyisocyanatkomponente aus organischen Polyisocyanaten mit freien Isocyanatgruppen und einer Viskosität bei 23°C von 50 bis 10000 mPa.s emulgiert, wobei
das Äquivalentverhältnis von Isocyanatgruppen der-Polyisocyanatkomponente zu alkoholischen Hydroxylgruppen in der Lösung oder Dispersion der Polyolkomponente 0,5:1 bis 5:1 beträgt;
ausgenommen Verfahren, in denen die Polyolkomponente zu 5 bis 70 Gew.-% bezogen auf das Gewicht der Komponente a1 oder a2), aus einem Reaktiwerdünner besteht, der eine wasserlösliche, bei Normaldruck nicht destillierbare oder einen Siedepunkt von mindestens 150°C aufweisende Verbindung mit einem unter 500 liegenden Molekulargewicht Mn und mindestens einer gegenüber Isocyanatgruppen reaktionsfähigen Gruppe ist.

Gegenstand der Erfindung ist auch die Verwendung dieser Lacke zur Herstellung von Lackierungen.

Die höhermolekulare Polyolkomponente a1) besteht im wesentlichen aus wasserverdünnbaren, d.h. in Wasser löslichen oder dispergierbaren, Hydroxylgruppen aufweisenden, urethangruppen- und sulfonatgruppenfreien Polykondensationsharzen eines über 500 liegenden Molekulargewichts Mn.

Der Begriff "Polykondensationsharze" soll insbesondere (i) fettsäure- und ölfreie Polyesterharze und (ii) fettsäure- oder ölmodifizierte Polyesterharze, sogenannte "Alkydharze", umfassen.

Als Kumponente a1) geeignete Polykondensationsharze sind insbesondere solche eines über 500 und bis zu 10 000 liegenden Molekulargewichts Mn, wobei hier Molekulargewichte von bis zu 5000 dampfdruckosmometrisch in Dioxan und Aceton bestimmt werden, wobei bei differierenden Werten der niedrige Wert als korrekt angesehen wird, und wobei Molekulargewichte von über 5000 membranosmometrisch in Aceton bestimmt werden. Die Polykondensationsharze weisen im allgemeinen Hydroxylzahlen von 30 bis 300, vorzugsweise von 50 bis 200 mg KOH/g und Säurezahlen von 25 bis 70, vorzugsweise 35 bis 55 mg KOH/g auf. Die Säurezahl bezieht sich hierbei sowohl auf die freien als auch die neutralisiert als Carboxylatgruppen vorliegenden Carboxylgruppen, die, insbesondere wenn sie in mit tert. Aminen neutralisierter Form vorliegen, ebenfalls bei der Titration mit Kaliumhydroxid erfaßt werden. Zur zumindest teilweisen Neutralisation der in den Polykondensationsharzen vorliegenden Carboxylgruppen werden insbesondere tert. Amine wie beispielsweise Triethylamin, N,N-Dimethylethanolamin oder N-MeLhyl-diethanolamin verwendet. Im allgemeinen liegen in den Polykondensationsharzen 50 bis 150 Milliäquivalente pro 100 g Feststoff an Carboxylatgruppen vor.

Die Herstellung der Polyester- bzw. Alkydharze erfolgt nach bekannten Verfahren durch Polykondensation von Alkoholen und Carbonsäuren, wie sie z.B. in Römpp's Chemielexikon, Band 1, Seite 202, Frankh'sche Verlagsbuchhandlung, Stuttgart, 1966, definiert oder bei D.H. Solomon, The Chemistry of Organic Filmformers, S. 75-101, John Wiley & Sons Inc., New York, 1967, beschrieben sind.

Ausgangsmaterialien für die Herstellung der Polykondensationsharze sind beispielsweise
- 1- bis 6-, vorzugsweise 1- bis 4-wertige Alkohole des Molekulargewichtsbereichs 32 bis 500 wie Ethylenglykol, Propylenglykol, Butandiole, Neopentylglykol, 2-Ethylpropandiol-1,3, Hexandiole, Etheralkohole wie Di- und Triethylenglykol, oxyethylierte Bisphenole : perhydrierte Bisphenole, ferner Trimethylolethan, Trimethylolpropan, Glycerin, Pentaerythrit, Dipentaerythrit, Mannit und Sorbit, einwertige, kettenabbrechende Alkohole wie Methanol, Propanol, Butanol, Cyclohexanol und Benzylalkohol;
- mehrwertige Carbonsäuren oder Carbonsäureanhydride des Molekulargewichtsbereichs 100 bis 300 wie Phthalsäure, Phthalsäureanhydrid, Isophthalsäure, Terephthalsäure, Tetrahydrophthalsäure (anhydrid), Hexahydrophthalsäure, Trimellitsäureanhydrid, Pyromellitanhydrid, Maleinsäureanhydrid, Adipinsäure oder Bernsteinsäureanhydrid;
- aromatische oder gesättigte aliphatische Monocarbonsäuren wie beispielsweise Benzoesäure, Hexahydrobenzoesäure, tert.-Butylbenzoesäure, Cocosfettsäuren oder α-Ethylhexansäsure;
- olefinisch ungesättigte Fettsäuren und Derivate von olefinisch ungesättigten Fettsäuren wie beispielsweise Leinöl-, Sojaöl-, Holzöl-, Saffloröl-, Ricinenöl-, Sonnenblumenöl -, Baumwollsaatöl-, ErdnuBöl- oder Tallölfettsäure, synthetische, olefinisch ungesättigte C₁₂-C₂₂-Fettsäuren sowie durch Konjugierung, Isomerisierung oder Dimerisierung solcher ungesättigter Fettsäuren erhaltene Derivate;
- die den letztgenannten natürlichen Fettsäuren entsprechenden Öle, d.h. Leinöl, Sojaöl, Holzöl, Saffloröl, Ricinenöl, Sonnenblumenöl, Baumwollsaatöl, Erdnußöl, Tallöl oder such Ricinusöl.

Bei der Herstellung von fettsäure- und ölfreien Polyestern werden die beispielhaft genannten ein- und insbesondere mehrwertigen Alkohole in an sich bekannter Weise mit den beispielhaft genannten mehrbasischen Säuren zur Reaktion gebracht.

Die Fett- bzw. Ölsäuren enthaltenden Alkydharze werden in an sich bekannter Weise aus Polyolen der beispielhaft genannten Art und Dicarbonsäuren bzw. deren Anhydriden der beispielhaft genannten Art unter Mitverwendung von nichttrocknenden, halbtrocknenden oder trocknenden Ölen der beispielhaft genannten Art bzw. deren Umesterungsprodukten mit mehrwertigen Alkoholen der beispielhaft genannten Art hergestellt. Anstelle der Öle oder deren Umesterungsprodukte können auch Fettsäuren oder Ölsäuren aus natürlichen Ölen oder synthetische Fettsäuren oder aus natürlichen Fett- oder Ölsäuren durch Hydrierung, Dehydratisierung oder Dimerisierung erhältliche Fettsäuren verwendet werden.

Als Polyole zur Herstellung der Alkydharze werden vorzugsweise mindestens dreiwertige Alkohole wie Glycerin oder Trimethylolpropan eingesetzt. Vier- und höherwertige Alkohole wie Pentaerythrit, Dipentaerythrit oder Sorbit bzw. ihre Mischungen mit den vorgenannten Polyolen sind zur Herstellung von wasserverdünnbaren Harzen besonders gut geeignet, da hohe Hydroxylzahlen der Alkydharze die Wasserverdünnbarkeit begünstigen. Zweiwertige Alkohole wie Ethylenglykol, Diethylenglykol, Butandiole oder Neopentylglykol können anteilweise mitverwendet werden.

Zur Herstellung der Alkydharze insbesondere geeignete Säuren bzw. Säureanhydride sind Adipinsäure, Isophthalsäure, Phthalsäure und ganz besonders bevorzugt Phthalsäureanhydrid.

Der erforderliche Hydroxylgruppengehalt wird in an sich bekannter Weise durch geeignete Wahl der Art und Mengenverhältnisse der Ausgangskomponenten im Rahmen der gemachten Offenbarung sichergestellt.

Die Carboxylgruppen, die insbesondere nach ihrer Neutralisation für die Wasserverdünnbarkeit der Harze verantwortlich sind, können beispielsweise durch Halbesterbildung aus einem vorgefertigten, Hydroxylgruppen aufweisenden Polyesterharz mit Säureanhydriden der genannten Art eingeführt werden. Für diese Halbesterbildung ist insbesondere Tetrahydrophthal säureanhydrid geeignet. Der Einbau von Carboxylgruppen kann auch beispielsweise durch Mitverwendung von Dimethylolpropionsäure bei der Polykondensationsreaktion erfolgen, deren freie Carboxylgruppe im allgemeinen wegen sterischer Hinderung nicht an der Polykondensationsreaktion teilnimmt, so daß der Einbau dieser Säure ausschließlich über die Hydroxylgruppen stattfindet.

Bei den Polymerisationsharzen. die Teil der gegebenenfalls verwendeten Komponente a2) sein können, handelt es sich vorzugsweise um Polyacrylatharze, d.h. hydroxyfunktionelle Copolymerisate des Hydroxylzahlbereichs 15 bis 200 mg KOH/g, des Säurezahlbereichs 5 bis 250 mg KOH/g, die im übrigen einen Gehalt an chemisch gebundenen Carboxylat- und/oder Sulfonatgruppen von insgesamt 8 bis 450 Milliäquivalenten pro 100 g Feststoff aufweisen. Die Säurezahl bezieht sich auch hier sowohl auf die freien, nicht neutralisierten Säuregruppen, insbesondere Carboxylgruppen, als auch auf die neutralisiert vorliegenden Säuregruppen, insbesondere Carboxylatgruppen. Die Copolymerisate weisen im allgemeinen ein nach der Methode der Gelpermeationschromatographie unter Verwendung von Polystyrol als Standard ermittelbares Molekulargewicht Mn von 500 bis 50 000, vorzugsweise 1000 bis 25 000 auf.

Vorzugsweise handelt es sich bei den Copolymerisaten um solche aus
A 1 bis 30, bevorzugt 1 bis 10 Gew. -% Acrylsäure und/oder Methacrylsäure,
B O bis 50 Gew.-% Methylmethacrylat,
C O bis 50 Gew. -% Styrol, wobei die Summe von B + C 10 bis 70 Gew. -% ergibt,
D 10 bis 45 Gew.-% eins oder mehrerer C₁-C₈-Alkylacrylate,
E 5 bis 45 Gew.-% eines oder mehrerer monohydroxyfunktioneller Alkylacrylate oder Alkylmethacrylate,
F 0 bis 15 Gew.-% anderer olefinisch ungesättigter Monomerer
wobei die Summe aus A bis F 100 Gew. -% ergibt, wobei außerdem 5 bis 100 % der einpolymerisiert vorliegenden Säuregruppen in mit aliphatischen Aminen oder mit Ammoniak neutralisierter Form vorliegen, so daß der Gehalt der Copolymerisate an anionischen salzartigen Gruppen den oben gemachten Angaben entspricht.

Die einpolymerisiert vorliegenden ungesättigten Säuren A und gegebenenfalls F werden, wie ausgeführt, zumindest teilweise neutralisiert, so daß die resultierenden anionischen Gruppen die Löslichkeit oder Dispergierbarkeit der Copolymerisate in Wasser gewährleisten bzw. zumindest erleichtern. Im Falle des Vorliegens von nur geringen Konzentrationen an salzartigen Gruppen kann die Löslichkeit bzw. Dispergierbarkeit der Copolymerisat in Wasser durch Mitverwendung von externen Emulgatoren erleichtert werden. Auf jeden Fall muß die Wasserverdünnharkeit der Copolymerisate entweder als Dispersion oder kolloid- bis molekulardisperse "Lösung" gewährleistet sein.

Die Monomeren B und C können so variiert werden, daß in der Summe B + C von 10 bis 70 Gew.-% ausschließlich eines der Monomeren enthalten ist, wobei dann Methylmethacrylat bevorzugt wird, jedoch ist es besonders bevorzugt, sowohl Methylmethacrylat als auch Styrol nebeneinander einzusetzen.

Als C₁-C₈-Alkylacrylat D kommen beispielsweise Methylacrylat, Ethylacrylat, n-Propylacrylat, iso-Propylacrylat, n-Butylacrylat, iso-Butylacrylat, n-Hexylacrylat, n-Octylacrylat, 2-Ethylhexylacrylat in Betracht. Bevorzugt werden n-Butylacrylat, n-Hexylacrylat. 2-Ethylhexylacrylat, insbesondere n-Butyl- und/oder n-Hexylacrylat.

Als hydroxyfunktionelle (Meth)acrylate E kommen beispielsweise Hydroxyethyl(meth)acrylat, Hydroxypropyl(meth)acrylat (durch Anlagerung von Propylenoxid an (Meth)Acrylsäure erhaltenes Isomerengemisch), 4-Hydroxybutyl (meth) acrylat oder beliebige Gemische dieser Monomeren in Betracht. Bevorzugt werden 2-Hydroxyethylmethacrylat und das genannte Hydroxypropylmethacrylat-Isomerengemish.

Die weiteren Monomerbausteine F können substituierte Styrolabkömmlinge, wie beispielsweise die isomeren Vinyltoluole, α-Methylstyrol, Propenylbenzol, C₅-C₁₂ Cycloalkyl(meth)acrylate, Vinylester wie Vinylacetat, -propionat oder -versatat, Vinylsulfonsäure darstellen. wobei die Gesamtmenge an polymerisierbaren Säuren (Carbonsäure A zuzüglich gegebenenfalls die unter F genannten Säuren) 30 Gew.-% nicht überschreitet.

Zur zumindest teilweisen Neutralisation der in den Polykondensationsharzen oder Polymerisationsharzen vorliegenden Säuregruppen kommen insbesondere die bereits oben beispielhaft genannten tert. Amine in Betracht.

Die Polyolkomponente a) liegt in in Wasser oder in einem Gemisch aus Wasser und organischen Lösungsmitteln gelöster bzw. dispergierter Form vor. Geeignete Lösungsmittel, die neben Wasser als kontinuierliche Phase dienen können sind solche, die im Sinne der Isocyanat-Additionsreaktion inert sind und unter Normaldruck (1013 mbar) unterhalb 300°C, vorzugsweise bei 100 bis 250°C sieden. Die bevorzugten Lösungsmittel weisen Ether- und/oder Estergruppen im Molekül auf und sind soweit mit Wasser verträglich, daß die Lösungen bzw. Dispersionen Systeme mit homogen verteilter H₂O/Cosolvens-Phase darstellen. Beispiele für gut geeignete Lösungsmittel a3) sind 1,4-Dioxan, 1,3,5-Trioxan, Diethylenglykoldimethylether, 1,3-Dioxolan Ethylenglykoldiacetat, Butyldiglykolacetat oder deren Gemische.

Im allgemeinen besteht die kontinuierliche Phase der Lösungen bzw. Dispersionen der Polyolkomponente a) zu 0 bis 50 Gew.-%, vorzugsweise 0 bis 20 Gew.-% aus Lösungsmitteln der beispielhaft genannten Art und zum Rest aus Wasser. In der Lösung bzw. Dispersion a) liegen die Bindemittelkomponenten a1) und gegebenenfalls a2) vorzugsweise insgesamt in einer Menge von 20 bis 65 Gew. -% vor.

Die Herstellung der Lösungen bzw. Dispersionen der Polyolkomponente a) kann mit der Neutralisation der vorliegenden Säuregruppen gegebenenfalls einhergehen, beispielsweise dergestalt, daß man die Carboxylgruppen aufweisenden Polykondensationsharze und gegebenenfalls Polymerisationsharze in eine wäßrige bzw. wäßrig-organische Lösung des Neutralisationsmittels einträgt. Man kann auch so vorgehen, daß man zunächst die Harze in einem Lösungsmittel der beispielhaft genannten Art aufnimmt, durch Zugabe eines tert. Amins neutralisiert und dann mit dem Wasser verrührt. Ebenfalls möglich ist eine Variante, derzufolge die Lösung im organischen Lösungsmittel mit einer Lösung des Neutralisationsmittels vermischt wird.

Bei der Polyisocyanatkomponente b) handelt es sich um beliebige organische Polyisocyanate mit aliphatisch, cycloaliphatisch, araliphatisch und/oder aromatisch gebundenen, freien Isocyanatgruppen, die bei Raumtemperatur flüssig sind. Die Polyisocyanatkomponente b) weist bei 23°C im allgemeinen eine Viskosität von 50 bis 10.000, vorzugsweise 50 bis 1000 mPa.s auf. Besonders bevorzugt handelt es sich bei dem Polyisocyanatgemisch um solche mit ausschließlich aliphatisch und/oder cycloaliphatisch gebundenen Isocyanatgruppen einer zwischen 2,2 und 5,0 liegenden (mittleren) NCO-Funktionalität und einer Viskosität bei 23°C von 50 bis 500 mPa.s.

Als Komponente b) geeignete Polyisocyanate sind insbesondere die sogenannten "Lackpolyisocyanate" mit aromatisch oder (cyclo)aliphatisch gebundenen Isocyanatgruppen, wobei die letztgenannten aliphatischen Polyisocyanate, wie bereits ausgeführt, besonders bevorzugt sind.

Sehr gut geeignet sind beispielsweise "Lackpolyisocyanate" auf Basis von Hexamethylendiisocyanat oder von 1-Isocyanato-3,3,5-trimethyl-5-isocyanatomethylcyclohexan (IPDI) und/oder Bis(isocyanatocyclohexyl)-methan, insbesondere solche, welche ausschließlich auf Hexamethylendiisocyanat basieren. Unter "Lackpolyisocyanaten" auf Basis dieser Diisocyanate sind die an sich bekannten Biuret-, Urethan-, Uretdion- und/oder Isocyanuratgruppen aufweisenden Derivate dieser Diisocyanate zu verstehen, die im Anschluß an ihre Herstellung in bekannter Weise, vorzugsweise durch Destillation von überschüssigem Ausgangsdiisocyanat, bis auf einen Restgehalt von weniger als 0,5 Gew.-% befreit worden sind. Zu den bevorzugten, erfindungsgemäß zu verwendenden aliphatischen Polyisocyanaten gehören den oben genannten Kriterien entsprechende, Biuretgruppen aufweisende Polyisocyanate auf Basis von Hexamethylendiisocyanat, wie sie beispielsweise nach den Verfahren der US-Patentschriften 3 124 605, 3 358 010, 3 903 126, 3 903 127 oder 3 976 622 erhalten werden können, und die aus Gemischen von N,N' ,N"-Tris-(6-isocyanatohexyl )-biuret mit untergeordneten Mengen seiner höheren Homologen bestehen, sowie die den genannten Kriterien entsprechenden cyclischen Trimerisate von Hexamethylendiisocyanat, wie sie gemäß US-PS 4 324 879 erhalten werden können, und die im wesentlichen aus N,N',N"-Tris-(6-isocyanatohexyl)-isocyanurat im Gemisch mit untergeordneten Mengen an seinen höheren Homologen bestehen. Insbesondere bevorzugt werden den genannten Kriterien entsprechende Gemische aus Uretdion- und/oder Isocyanuratgruppen aufweisenden Polyisocyanaten auf Basis von Hexamethylendiisocyanat, wie sie durch katalytische Oligomerisierung von Hexamethylendiisocyanat unter Verwendung von Trialkylphosphinen entstehen. Besonders bevorzugt sind die zuletzt genannten Gemische einer Viskosität bei 23°C von 50 bis 500 mPa.s und einer zwischen 2,2 und 5,0 liegenden NCO-Funktionalität.

Bei den erfindungsgemäß ebenfalls geeigneten, jedoch weniger bevorzugten aromatischen Polyisocyanaten handelt es sich insbesondere um "Lackpolyisocyanate" auf Basis von 2,4-Diisocyanatotoluol oder dessen technischen Gemischen mit 2,6-Diisocyanatotoluol oder auf Basis von 4,4' -Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate, wie sie durch Umsetzung von überschüssigen Mengen an 2,4-Diiso-cyanatotoluol mit mehrwertigen Alkoholen wie Trimethylolpropan und anschlieBender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanato-isocyanurate, die ebenfalls im Anschluß an ihre Herstellung vorzugsweise destillativ von überschüssigen monomeren Diisocyanaten befreit worden sind.

Grundsätzlich möglich ist selbstverständlich auch die Verwendung von unmodifizierten Polyisocyanaten der beispielhaft genannten Art, falls diese den gemachten Ausführungen bezüglich der Viskosität entsprechen.

Grundsätzlich möglich, im allgemeinen jedoch wegen der emulgierenden Wirkung der Komponenten a1) und a2) nicht erforderlich ist die Verwendung von hydrophil modifizierten Polyisocyanaten als Komponente b) oder als Teil der Komponente b). Eine derartige Hydrophilierung der Polyisocyanate kann beispielsweise durch Umsetzung eines Teils der Isocyanatgruppen mit einwertigen. Ethylenoxideinheiten aufweisenden Polyetheralkoholen, beispielsweise den Ethoxylierungsprodukten von einfachen Alkanolen mit 5 bis 100 Ethylenoxideinheiten pro Molekül erfolgen. Auch eine ionische Modifizierung der Polyisocyanatkomponente, beispielsweise durch Umsetzung mit unterschüssigen Mengen an Dimethylolpropionsäure und anschließende Neutralisation des resultierenden Umsetzungsprodukts ist prinzipiell möglich, im allgemeinen jedoch nicht erforderlich.

In den erfindungsgemäßen Beschichtungsmitteln können neben den Komponenten a1), a2) und b) die aus der Lacktechnologie üblichen Hilfs- und Zusatzmittel vorliegen. Beispielhaft genannt seien Pigmente, Entschäumungsmittel, Verlaufsmittel, Dispergierhilfsmittel für die Pigmentverteilung, Sikkative, Füllstoffe, Katalysatoren für die Isocyanat-Additionsreaktion, Entschäumungsmittel oder auch (weniger bevorzugt) Hilfslösungsmittel die nicht in den Film eingebaut werden.

Zur Herstellung der gebrauchsfertigen Beschichtungsmittel wird die Polyisocyanatkomponente b) in der wäßrigen oder wäßrig-organischen Lösung oder Dispersion der Komponente a) emulgiert. Die Durchmischung kann durch einfaches Verrühren bei Raumtemperatur erfolgen. Die Menge der Polyisocyanatkomponente b) wird dabei so bemessen, daß ein Äquivalentverhältnis von Isocyanatgruppen der Komponente b) zu gegenüber Isocyanatgruppen reaktionsfähigen Gruppen der Komponenten a1) und a2) von 0,5:1 bis 5:1, vorzugsweise 0,8:1 bis 2:1 resultiert.

Die gegebenenfalls mitverwendeten Hilfs- und Zusatzmittel werden dem System vorzugsweise vor der Zugabe der Polyisocyanatkomponente b) durch Einrühren einverleibt.

Die erfindungsgemäßen Beschichtungsmittel können nach allen technisch üblichen Methoden wie z.B. Spritzen, Tauchen oder Streichen auf beliebige Substrate aufgetragen und bei Raumtemperatur bis 160°C, vorzugsweise 60 bis 140°C, vernetzt werden, wobei im Falle erhöhter Härtungstemperaturen Einbrennzeiten von 15 bis 45 Minuten im allgemeinen ausreichen. Die resultierenden Lackfilme sind kratzfest (nagelhart) und lösungsmittelbeständig, blasenfrei, glänzend und als Klarlacke transparent.

Die erfindungsgemäBe Verwendung eignet sich insbesondere zur Herstellung von Grundierungen oder Decklackierungen auf Holz-, Metall- und Kunststoffsubstraten, beispielsweise zur Herstellung von Füllern, Base-coats und Clearcoats bei der Erst- und Reparaturlackierung von Kraftfahrzeuaen, für die Möbellackierung, Industrielacke, für den Bautenschutz etc.

In den nachfolgenden Beispielen beziehen sich alle Angaben in "Prozent" bzw. in "Teilen" auf das Gewicht.

### Beispiel 1

1127,1 Teile Propandiol-1,2, 755,9 Teile Trimethylolpropan, 746,2 Teile Adipinsäure und 1828,5 Teile Phthalsäureanhydrid werden bei 230°C unter Stickstoffatmosphäre bis zu einer Säurezahl von 7,9 und einer Viskosität von 143 sec (gemessen an einer 60 gew.-%igen Lösung in Dimethylformamid nach DIN 53 211) verestert. Um zu große Propandiolverluste zu vermeiden, erfolgt die Veresterung unter Verwendung einer Kolonne. Außerdem wird die Temperatur stufenweise mit 10°C/h von 140 auf 230°C gesteigert. Die oben angegebenen Kennzahlen werden nach einer Nachreaktionszeit von 3,5 h bei 230°C erreicht.

Zu 3309,7 Teilen dieses Harzes werden 309,5 Teile Tetrahydrophthalsäureanhydrid (geschmolzen) bei 130°C zugegeben. Dann läßt man bei 130°C nachreagieren, bis das Harz eine Säurezahl von 39 aufweist. Die Viskosität, 60 gew.-%ig in Dimethylformamid nach DIN 53 211 oemessen, beträgt 182 sec. Die OH-Zahl des lösungsmittelfreien Harzes liegt bei 150 mg KOH/g.

Das erhaltene Harz wurde 63 %ig in Diethylenglykoldimethylether gelöst und dann durch Zugabe von 4,6 Teilen Dimethylethanolamin auf 100 Teile 63 % ige Harzlösung neutralisiert. Anschließend wurde mit Wasser auf 29,3 Gew,-% Harzgehalt verdünnt.

Ausgehend von dieser wäßrigen Lösung wurden dann Zweikomponenten-Wasserlacke mit einem aliphatischen Lackpolyisocyanat in NCO/OH-Äquivalentverhältnissen von 1,25:1, 1,50:1 und 1,75:1 hergestellt. Als Lackpolyisocyanat diente ein Biuretgruppen aufweisendes Polyisocyanat auf Basis von Hexamethylendiisocyanat mit einem NCO-Gehalt von 22,5 %. Das Polyisocyanat wurde in Form einer 75 gew. -%igen Lösung in Diethylenglykoldimethylether zur wäßrigen Lösung des Harzes gegeben. Nach intensivem Verrühren wird eine stabile Emulsion erhalten, die ca. 30 Minuten verarbeitbar ist. Mit einem Filmziehrahmen werden die erhaltenen Emulsionen mit 180 µm NaBfilmdicke auf Glasplatten aufgezogen und 30 Minuten bei 80 oder 120°C gehärtet. Alle so erhältlichen Filme sind acetonbeständig vernetzt und weisen eine gute Kratzfestigkeit und Härte auf.

### Beispiel 2

1620,2 Teile Rizinusöl, 581 , 9 Teile Trimethylolpropan, 485,4 Teile Pentaerythrit, 470,9 Teile Benzoesäure und 1141,6 Teile Phthalsäureanhydrid werden in einem V2A-Kessel, ausgestattet mit Rührer, Einleitungsrohr, Destillationsbrücke und Thermometer, unter Stickstoffatmosphäre vorgelegt und dann auf 140°C aufgeheizt. Im Verlauf von 12 h wird dann unter Durchleiten von 3 Liter Stickstoff pro h die Temperatur von 140 auf 260°C gesteigert (10° C/h). Bei 260°C wird dann kondensiert, bis die Viskosität nach anfänglichem Absinken wieder ansteigt. Das erhaltene Harz hat eine Säurezahl von 5,0 und eine Viskosität von 109 sec (70 Gew.-%ig in Xylol nach DIN 53 211).

Zu 2789,9 Teilen dieses Harzes werden 329,7 Teile Tetrahydrophthalsäureanhydrid (geschmolzen) bei 150°C zugegeben. Dann läßt man bei 150°C nachreagieren, bis das Harz eine Säurezahl von 44,2 aufweist. Die Viskosität (60 gew.-%ig in Xylol nach DIN 53 211 gemessen) beträgt 45 sec. Die OH-Zahl des lösungsmittelfreien Harzes liegt bei ca. 50 mg KOH/g.

Das Harz wurde zu 63 % in Diethylenglykoldimethylether gelöst und die so erhaltene Lösung mit 4,6 Teilen Dimethylethanolamin auf 100 Teile Lösung neutralisiert. Anschließend wurde mit Wasser auf 30,4 Gew.-% Harzgehalt verdünnt. Ausgehend von dieser wäßrigen Lösung wurden dann Zweikomponenten-Wasserlacke mit dem Polyisocyanat gemäß Beispiel 1 hergestellt. Die NCO : OH-Verhältnisse betrugen dabei 1,25:1, 1,50:1 und 1,75:1. Das Polyisocyanat wird dabei als 75 gew.-%ige Lösung in Diethylenglykoldimethylether zur wäßrigen Lösung des Harzes gegeben. Nach intensivem Verrühren wird eine stabile Emulsion erhalten, die ca. 30 Minuten verarbeitbar ist.

Die so erhaltenen Emulsionen wurden mit einer NaBfilmdicke von 180 µm mit einem Filmziehrahmen auf Glasplatten aufgezogen und wahlweise 30 Minuten bei 80 oder 120°C gehärtet. In der folgenden Tabelle sind die Ergebnisse aufgeführt.

| NCO:OH | Temp. | Pendelhärte nach König | Vernetzung (Lösemitteltest) |
|---|---|---|---|
| | | | |
| 1,25 | 80°C | 60,6 sec | vernetzt |
| 1,25 | 120°C | 108,3 sec | vernetzt |
| | | | |
| 1,50 | 80°C | 69,5 sec | vernetzt |
| 1,50 | 120°C | 111,4 sec | vernetzt |
| | | | |
| 1,75 | 80°C | 76,2 sec | vernetzt |
| 1,75 | 120°C | 120,4 sec | vernetzt |

Von dem Lack mit einem NCO : OH-Verhältnis von 1 ,25:1 wurde zusätzlich eine Trocknung bei Raumtemperatur durchgeführt. Die Trocknungszeit bis zur Klebfreiheit beträgt etwa 3 Stunden. Nach Durchhärtung über Nacht wird ein vernetzter, elastischer Überzug erhalten.

### Beispiel 3

2899,3 Teile Leinöl, 666,1 Teile Pentaerythrit und 734,6 Teile Trimethylolpropan werden unter Stickstoffatmosphäre auf 200°C aufgeheizt. Dann wird die Temperatur in 1 h von 200 auf 260°C erhöht. Bei 260°C wird dann verkocht, bis die Viskosität, 70 Gew.-%ig in Xylol nach DIN 53 211 gemessen, 26 sec beträgt.

Zu 2644,0 Teilen dieses Harzes werden 484,2 Teile Trimethylolpropan, 440,9 Teile Benzoesäure, 1069,6 Teile Phthalsäureanhydrid und 265,0 Teile Albertol® KP 626 gegeben. Unter Stickstoffatmosphäre wird auf 140°C aufgeheizt. Dann wird die Temperatur stufenweise mit 10°C/h von 140 auf 220°C erhöhL. Bei 220°C wird dann verestert, bis die Säurezahl 2,0 beträgt. Die Viskosität nach DIN 53 211, 50 gew.-%ig in Dimethylformamid gemessen, ergab 16 sec.

Zu 3798,0 Teilen dieses Harzes werden dann 516,9 Teile Tetrahydrophthalsäureanhydrid (geschmolzen) bei 130°C zugegeben und bei dieser Temperatur umgesetzt bis zu einer Säurezahl von 49,3 und einer Viskosität von 31 sec (60 gew.-Xig in Dimethylformamid nach DIN 53 211 gemessen). Die OH-Zahl des lösungsmittelfreien Harzes lag bei 95 mg KOH/g.

## Patentansprüche

1. Lacke auf Basis eines Bindemittels bestehend aus einer Kombination aus
a) einer in Wasser bzw. einem Wasser/Lösungsmittelgemisch gelöst und/oder dispergiert vorliegenden Polyolkomponente und
b) einer in der Lösung und/oder Dispersion a) emulgierbaren Polyisocyanatkomponente aus organischen Polyisocyanaten mit freien Isocyanatgruppen und einer Viskosität bei 23°C von 50 bis 10000 mPa.s
in einem Äquivalentverhältnis von Isocyanatgruppen der Komponente b) zu alkoholischen Hydroxylgruppen in der Lösung und/oder Dispersion a) von 0,5:1 bis 5:1 entsprechenden. Mengen, **dadurch gekennzeichnet, daß** die Polyolkomponente im wesentlichen aus
a1) einem wasserverdünnbaren, Hydroxylgruppen aufweisenden, urethangruppen- und sulfonatgruppenfreien Polykondensationsharz mit einem Molekulargewicht Mn von mehr als 500 oder
a2) einem Gemisch eines derartigen Polykondensationsharzes mit bis zu 100 Gew.-%, bezogen auf das Gewicht des Polykondensationsharzes, mindestens eines wasserverdünnbaren, Hydroxylgruppen aufweisenden Polymerisationsharzes mit einem Molekulargewicht Mn von mehr als 500
besteht;
ausgenommen Bindemittel, in denen die Komponente a) zu 5 bis 70 Gew.-% bezogen auf das Gewicht der Komponente a1) oder a2), aus einem Reaktivverdünner besteht, der eine wasserlösliche, bei Normaldruck nicht destillierbare oder einen Siedepunkt von mindestens 150°C aufweisende Verbindung mit einem unter 500 liegenden Molekulargewicht Mn und mindestens einer gegenüber Isocyanatgruppen reaktionsfähigen Gruppe ist.

2. Verfahren zur Herstellung eines Lackes gemäß Anspruch 1, **dadurch gekennzeichnet, daß** man in einer wäßrigen oder wäßrig-organischen Lösung oder Dispersion einer Polyolkomponente bestehend im wesentlichen aus
a1) einem wasserverdünnbaren, Hydroxylgruppen aufweisenden, urethangruppen- und sulfonatgruppenfreien Polykondensationsharz mit einem Molekulargewicht Mn von mehr als 500 oder
a2) einem Gemisch eines derartigen Polykondensationsharzes mit bis zu 100 Gew.-%, bezogen auf das Gewicht des Polykondensationsharzes, mindestens eines wasserverdünnbaren, Hydroxylgruppen aufweisenden Polymerisationsharzes mit einem Molekulargewicht Mn von mehr als 500
eine Polyisocyanatkomponente aus organischen Polyisocyanaten mit freien Isocyanatgruppen und einer Viskosität bei 23°C von 50 bis 10000 mPa . s emulgiert, wobei
das Äquivalentverhältnis von Isocyanatgruppen der Polyisocyanatkomponente zu alkoholischen Hydroxylgruppen in der Lösung oder Dispersion der Polyolkomponente 0,5:1 bis 5:1 beträgt;
ausgenommen Verfahren, in denen die Polyolkomponente zu 5 bis 70 Gew. -% bezogen auf das Gewicht der Komponente a1) oder a2), aus einem Reaktivverdünner besteht, der eine wasserlösliche, bei Normaldruck nicht destillierbare oder einen Siedepunkt von mindestens 150°C aufweisende Verbindung mit einem unter 500 liegenden Molekulargewicht Mn und mindestens einer gegenüber Isocyanatgruppen reaktionsfähigen Gruppe ist.

3. Verwendung der Lacke gemäß Anspruch 1 zur Herstellung von Grundierungen oder Decklackierungen.

4. Verfahren zum Lackieren von Substraten, in dem Lacke gemäß Anspruch 1 auf ein Substrat aufgetragen werden und bei Raumtemperatur bis 160 °C vernetzt werden.

5. Lackiertes Substrat erhältlich nach Anspruch 4.

## Claims

1. Paints based on a binder consisting of amounts corresponding to a combination of
a) a polyol component dissolved and/or dispersed in water or a water/solvent mixture and
b) a polyisocyanate component emulsifiable in solution and/or dispersion a) and consisting of organic polyisocyanates with free isocyanate groups and a viscosity at 23 °C of 50 to 10000 mPa·s
in an equivalent proportion of isocyanate groups of component b) to alcoholic hydroxyl groups in solution and/or dispersion a) of 0.5 : 1 to 5 : 1, **characterised in that** the polyol component consists substantially of
a1) a water-dilutable polycondensation resin having hydoxyl groups and without urethane groups and sulfonate groups, with a molecular weight Mn of more than 500, or
a2) a mixture of such a polycondensation resin with up to 100 wt %, referred to the weight of the polycondensation resin, of at least one water-dilutable polymerisation resin having hydroxyl groups, with a molecular weight Mn of more than 500;
except for binders in which component a) consists of 5 to 70 wt %, referred to the weight of component a1) or a2), of a reactive diluent which is a compound water-soluble, non-distillable at standard pressure or with a boiling point of at least 150 °C and having a molecular weight Mn of less than 500 and at least one group reactive to isocyanate groups.

2. Process for manufacturing a paint according to claim 1, **characterised in that** a polyisocyanate component consisting of organic polyisocyanates with free isocyanate groups and a viscosity at 23 °C of 50 to 10000 mPa·s is emulsified in an aqueous or aqueous-organic solution or dispersion of a polyol component consisting substantially of
a1) a water-dilutable polycondensation resin having hydoxyl groups and without urethane groups and sulfonate groups, with a molecular weight Mn of more than 500, or
a2) a mixture of such a polycondensation resin with up to 100 wt %, referred to the weight of the polycondensation resin, of at least one water-dilutable polymerisation resin having hydroxyl groups, with a molecular weight Mn of more than 500,
in which the equivalent proportion of isocyanate groups of the polyisocyanate component to alcoholic hydroxyl groups in the solution or dispersion of the polyol component comes to 0.5 : 1 to 5 : 1;
except for processes in which the polyol component consists of 5 to 70 wt %, referred to the weight of component a1) or a2), of a reactive diluent which is a compound water-soluable, non-distillable at standard pressure or with a boiling point of at least 150 °C and having a molecular weight Mn of less than 500 and at least one group reactive to isocyanate groups.

3. Use of the paints according to claim 1 for preparing primer coats or top coats.

4. Process for the painting of substrates, in which paints according to claim 1 are applied to a substrate and are cured at room temperature to 160 °C.

5. Painted substrate obtainable according to claim 4.

## Revendications

1. Laques, vernis ou peintures à base d'un liant constitué d'une combinaison constituée par
a) un composant de polyol présent à l'état dispersé et/ou dissous dans de l'eau respectivement dans un mélange d'eau/solvant et
b) un composant de polyisocyanate apte à être émulsifié dans la solution et/ou dans la dispersion a), constitué par des polyisocyanates organiques comprenant des groupes isocyanates libres et possédant une viscosité à 23 °C de 50 à 10.000 mPa.s
en une quantité correspondant à un rapport d'équivalence des groupes isocyanates du composant b) aux groupes hydroxyle alcooliques dans la solution et/ou la dispersion a) de 0,5 : 1 à 5 : 1, **caractérisés en ce que** le composant de polyol est constitué essentiellement par
a1 une résine de polycondensation exempte de groupes uréthane et de groupes sulfonates, présentant des groupes hydroxyle et apte à être diluée dans l'eau, qui possède un poids moléculaire Mn supérieur à 500 ou
a2) un mélange d'une résine de polycondensation de ce type avec, jusqu'à concurrence de 100 % en poids rapportés au poids de la résine de polycondensation, au moins une résine de polymérisation présentant des groupes hydroxyle et apte à être diluée dans l'eau, qui possède un poids moléculaire Mn supérieur à 500,
à l'exception de liants dans lesquels le composant a) est constitué, jusqu'à concurrence de 5 à 70 % en poids rapportés au poids du composant a1) ou a2), d'un diluant réactif qui représente un composé soluble dans l'eau, présentant un point d'ébullition d'au moins 150 °C ou qui ne peut être distillé sous pression normale, qui possède un poids moléculaire Mn inférieur à 500 et qui présente au moins un groupe apte à réagir vis-à-vis de groupes isocyanates.

2. Procédé pour la préparation de laques, de vernis ou de peintures selon la revendication 1, **caractérisé en ce qu'**on émulsifie, dans une dispersion ou dans une solution aqueuse ou aqueuse-organique, un composant de polyol constitué essentiellement par
a1) une résine de polycondensation exempte de groupes uréthane et de groupes sulfonates, présentant des groupes hydroxyle et apte à être diluée dans l'eau, qui possède un poids moléculaire Mn supérieur à 500 ou
a2) un mélange d'une résine de polycondensation de ce type avec, jusqu'à concurrence de 100 % en poids rapportés au poids de la résine de polycondensation, au moins une résine de polymérisation présentant des groupes hydroxyle et apte à être diluée dans l'eau, qui possède un poids moléculaire Mn supérieur à 500,
un composant de polyisocyanate constitué par des polyisocyanates organiques comprenant des groupes isocyanates libres et possédant une viscosité à 23 °C de 50 à 10.000 mPa.s, dans lequel le rapport d'équivalence des groupes isocyanates du composant b) aux groupes hydroxyle alcooliques dans la solution et/ou la dispersion a) a une valeur de 0,5 : 1 à 5 : 1, ,
à l'exception de procédés dans lesquels le composant de polyol est constitué, jusqu'à concurrence de 5 à 70 % en poids rapportés au poids du composant a1) ou a2), d'un diluant réactif qui représente un composé soluble dans l'eau, présentant un point d'ébullition d'au moins 150 °C ou qui ne peut être distillé sous pression normale, qui possède un poids moléculaire Mn inférieur à 500 et qui présente au moins un groupe apte à réagir vis-à-vis de groupes isocyanates.

3. Utilisation de laques, de vernis ou de peintures selon la revendication 1, pour la préparation de couches de fond ou de laques, de vernis ou de peintures de finition.

4. Procédé pour l'application sur un substrat de laques, de vernis ou de peintures, dans lequel on applique des laques, des vernis ou des peintures selon la revendication 1 sur un substrat et on les soumet à une réticulation à une température s'étendant dans la plage de la température ambiante à une température de 160 °C.

5. Substrat muni d'une laque, d'un vernis ou d'une peinture, que l'on obtient conformément à la revendication 4.
